Europäisches Patentamt

European Patent Office

Office européen des brevets

(11) Veröffentlichungsnummer : **0 269 622**
**B1**

(12) **EUROPÄISCHE PATENTSCHRIFT**

(45) Veröffentlichungstag der Patentschrift :
15.03.89

(21) Anmeldenummer : 86904804.1

(22) Anmeldetag : 23.07.86

(86) Internationale Anmeldenummer :
PCT/EP 86/00431

(87) Internationale Veröffentlichungsnummer :
WO/8700901 (12.02.87 Gazette 87/04)

(51) Int. Cl.⁴ : **F 16 H 47/08, F 16 H 57/02**

(54) GETRIEBE FÜR EIN KRAFTFAHRZEUG.

(30) Priorität : 06.08.85 PCT/EP85/00397

(43) Veröffentlichungstag der Anmeldung :
08.06.88 Patentblatt 88/23

(45) Bekanntmachung des Hinweises auf die Patenterteilung : 15.03.89 Patentblatt 89/11

(84) Benannte Vertragsstaaten :
DE FR GB IT NL SE

(56) Entgegenhaltungen :
EP--A-- 0 039 936
DE--A-- 2 743 581
DE--A-- 2 830 543
FR--A-- 2 274 844
GB--A-- 2 076 083
GB--A-- 2 138 517
US--A-- 3 314 307
US--A-- 3 494 223
US--A-- 4 346 622
US--A-- 4 468 982

(73) Patentinhaber : ZAHNRADFABRIK FRIEDRICHSHA-
FEN AKTIENGESELLSCHAFT
Löwentaler Strasse 100 Postfach 2520
D-7990 Friedrichshafen 1 (DE)

(72) Erfinder : BUCKSCH, Manfred
Prälat Lutz Strasse 24
D-7990 Friedrichshafen (DE)

(74) Vertreter : Raue, Reimund
Zahnradfabrik Friedrichshafen AG Löwentaler
Strasse 100 Postfach 2520
D-7990 Friedrichshafen 1 (DE)

## Beschreibung

Diese Erfindung betrifft ein Getriebe für ein Kraftfahrzeug nach dem Oberbegriff von Anspruch 1.

Zur Gewinnung von einem möglichst großem Nutzraum bei kleinen Personenkraftfahrzeugen werden die Antriebsmotoren quer zur Fahrtrichtung angeordnet und in Verbindung mit einem Frontantrieb eingesetzt. Dabei ist der Antriebsmotor und ein mit einer hydrodynamischen Einheit komplettiertes Mehrgangautomatgetriebe koaxial angeordnet.

Ein solches Getriebe ist aus der Firmenschrift F1/36 WH 816009, Seite 3, wie auch aus den Typenblättern F43/301 RT 3356-683 und F43/437 RT 3397-683 oder der US-A 44 68 982 bekannt.

Der Raum quer zur Fahrtrichtung ist dabei so ausgefüllt, daß Weiterentwicklungen mit z. B. einem länger bauenden Motor nicht mehr mit den schon in axialer Erstreckung eng bauenden bekannten selbsttätig schaltenden Getrieben möglich sind oder, es kann ein bis jetzt nur mit einem einfachen Handschaltgetriebe ausgerüstetes Kraftfahrzeug mit einem solchen selbsttätig schaltenden Getriebe nicht ausgerüstet werden.

Es ist deshalb Aufgabe der Erfindung, ein Getriebe für ein Kraftfahrzeug nach dem Oberbegriff von Anspruch 1 so weiterzuentwickeln, daß der Bauraum in axialer Richtung und am Ende des Mehrgangautomatgetriebes auch im Durchmesser bzw. in der Bauhöhe verringert wird, ohne die Funktionen des Getriebes einzuschränken.

Diese Aufgabe wird mit den kennzeichnenden Merkmalen vom Anspruch 1 erfüllt.

Die Anordnung des Abtriebsstirnrades unmittelbar neben dem reduzierten Planetenkoppelgetriebe und eine direkte Verbindung eines Abtriebselementes dieses Getriebes z. B. des Hohlrades mit dem Abtriebsstirnrad im Bereich der Laufverzahnung, also relativ weit außen, ergibt eine günstige Bauraumausnutzung. Die sonst notwendige Verbindung vom relativ weit radial außen liegenden Hohlrad bis zur Hohlwelle des Abtriebsstirnrades, die weit innen liegt, kann dabei entfallen, weil das Antriebsstirnrad selbst diese Funktion übernimmt. Mit der Anordnung des Lagers hinter der Ebene der Laufverzahnung und der Plazierung des Freilaufes zwischen Lager und Getriebegehäuse ist auch ein erhebliche Durchmesserreduzierung verbunden, weil allein diese beiden radial kleinbauenden Elemente in axialer Richtung Bauraum benötigen, so daß das sonst in axialer Richtung mit gleichem Durchmesser bauende Getriebegehäuse abgestuft werden kann. So kann z. B. der Rahmen des Fahrzeuges in diesem freien Raum liegen und der Einbau eines Automatgetriebes ist möglich. Dieser Bauraumgewinn wird auch nicht durch den Durchzug vom Planetenträger zum Freilauf, der durch das Abtriebsstirnrad erfolgen muß, infolge der relativ geringen Dimensionierung dieses Durchzuges wesentlich verringert. Durch den Wegfall von Verbindungselementen mit einer relativ großen nötigen Dimensionierung und einer sehr vorteilhaften Anordnung der einzelnen Getriebeelemente verringert sich der Bauraumbedarf für das Getriebe insgesamt erheblich. Darüber hinaus wird durch den Wegfall von Teilen und von möglichen maßlichen Reduzierungen am Gehäuse sowie an Elementen des Getriebes, z. B. der Seitenwelle, Gewicht eingespart, ohne daß die Funktion des Gangwechselgetriebes und dessen Lebensdauer beeinträchtigt wird.

Mit den Ansprüchen 2 bis 4 wird die Erfindung in vorteilhafter Weise ausgestaltet.

So kann der Freilaufaußenring in einer zweiten Funktion Bestandteil des im Bereich des Abtriebsrades angeordneten Abschlußdeckels sein. Die Montage und Demontage des Stirnrades, das mit dem Abtriebsstirnrad kämmt und auf der Seitenwelle angeordnet ist, kann über eine zweite Öffnung erfolgen, die mit einem einfach geformten und damit billig herstellbaren wenig Bauraum in Anspruch nehmenden runden Deckel verschlossen ist. Die Halterung des Deckels kann dabei über eine Ringfeder oder einen Seegerring erfolgen.

Und schließlich ist die Anordnung der Bremse mit der Einrichtung zu ihrer Betätigung in der axialen Ebene des Planetenträgers des Planetenkoppelgetriebes in bezug auf den Bauraum von Vorteil, weil zumindest ein Teil dieser Gesamtbreite zur Bauraumreduzierung in axialer Richtung beitragen kann.

Weitere Einzelheiten der Erfindung werden anhand von Ausführungsbeispielen und Zeichnungen erläutert.

Es zeigen :

Fig. 1 ein Gangwechselgetriebe nach der Gattung in schematischer Darstellung.

Fig. 2 ein Gangwechselgetriebe nach Fig. 1 im Bereich zwischen reduziertem Planetenkoppelgetriebe und der hinteren Begrenzung des Getriebegehäuses in verbesserter Anordnung.

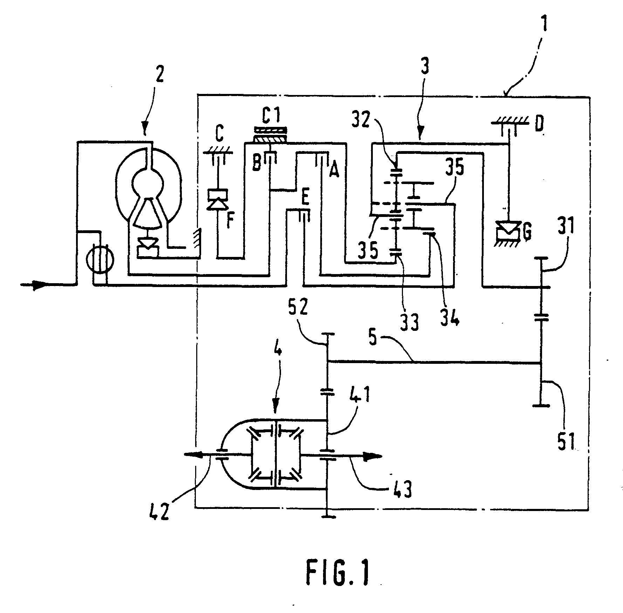

In Fig. 1 ist das gesamte selbsttätig schaltende Gangwechselgetriebe 1 und der zwischen Antriebsmotor (nicht gezeichnet) und diesem Getriebe angeordnete hydrodynamische Drehmomentwandler 2 dargestellt, wobei anstelle des hydrodynamischen Drehmomentwandlers auch eine hydrodynamische Kupplung angeordnet sein kann. Dieses Getriebe besteht aus einem reduzierten Planetenkoppel getriebe 3, den Schaltkupplungen A, B, E, den Schaltbremsen C, C-, D und den Freiläufen F, G zur wahlweisen Betätigung und Gangschaltung.

Der Motor, der hydrodynamische Drehmomentwandler und das reduzierte Planetenkoppelgetriebe mit den Kupplungen und Bremsen sowie Freiläufen sind koaxial zueinander angeordnet und im Fahrzeug quer eingebaut. Über das Abtriebsstirnrad 31 und die Stirnräder 51, 52 auf der Seitenwelle 5 und 41 am Achsgetriebe 4 wird das Antriebsmoment auf dieses und damit auf die Antriebshalbachsen 42, 43 übertragen.

Das Planetenkoppelgetriebe 3 ist in diesem Beispiel als sogenanntes reduziertes Koppelgetriebe ausgeführt mit nur einem Hohlrad 32 als Abtrieb, das mit dem Abtriebsstirnrad 31 verbunden ist. Der Antrieb erfolgt gangabhängig, z. B.

im 1. und 2. Gang über das 2. Sonnenrad 34,

im 3. Gang über das 2. Sonnenrad 34 und dem Planetenträger 35,

im 4. Gang nur über den Plantenträger 35 und

im R-Gang über das 1. Sonnenrad 33.

Mit dem Plantenträger 35 ist in Richtung Abtrieb noch die Bremse D und der Freilauf G verbunden, die im Zusammenhang mit der Schaltung des 1. und des R.-Ganges benötigt werden.

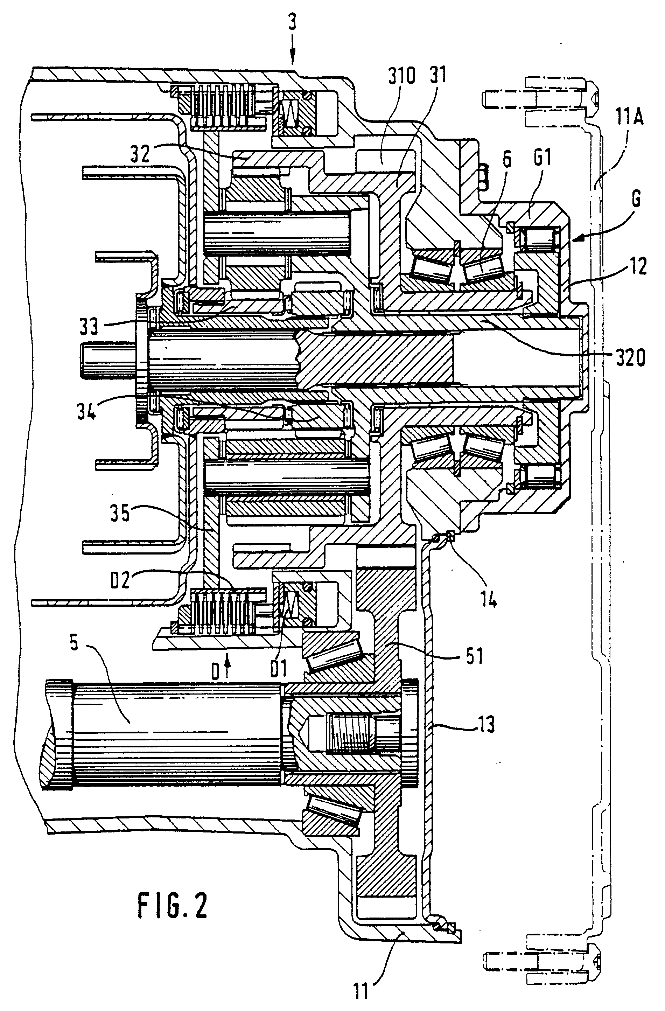

Während das selbsttätig schaltende Gangwechselgetriebe in Achsrichtung vom Antrieb aus gesehen bis zu den Radsätzen des reduzierten Planetenkoppelgetriebes unverändert bleibt, ergeben sich von da ab bei gleicher Getriebefunktion erhebliche bauliche Veränderungen. So ist, wie Fig. 2 zeigt, das Abtriebsstirnrad 31 nicht, wie allgemein bekannt, als letztes Getriebeelement direkt am stirnseitigen Gehäuse (alter Getriebegehäusedeckel 11A), sondern unmittelbar neben dem Koppelgetriebe 3 angeordnet.

Das Hohlrad 32 ist mit dem Antriebsstirnrad 31 nahe an der Laufverzahnung 310 fest verbunden. Der Freilauf G ist hinter dem Lager 6 zwischen diesem und dem Getriebegehäusedeckel 12 angeordnet, und nicht, wie aus Fig. 1 erkennbar, zwischen dem reduzierten Planetenkoppelgetriebe 3 und dem Abtriebsstirnrad 31. Die Verbindung 320 zwischen Freilauf G und dem Planetenträger 35 ist darüber hinaus noch in den Getriebedeckel 12 eingebaut, und der Freilaufaußenring G1 kann Bestandteil dieses Getriebedeckels sein, wie die Fig. 2 zeigt. Die Bremse D mit dem zur Betätigung nötigen Druckkolben D1 ist radial außen direkt in der axialen Ebene des Koppelgetriebes 3 angeordnet, so daß sich eine sehr kurze Verbindung des Innenlamellenträgers D2 mit dem Planetenträger 35 ergibt. Im Bereich der Seitenwelle 5 vorzugsweise zur Montage des Stirnrades 51, das auf der Seitenwelle angeordnet ist, ist ein besonders flachbauender, einfacher runder Deckel 13 vorgesehen, der über eine Ringfeder 14 oder einen Seegerring gehalten wird.

Die Erfindung beschränkt sich nicht allein auf das beschriebene selbsttätig schaltende Getriebe mit vier Gängen und einem reduzierten Planetenkoppelgetriebe. Insbesondere können auch andere Koppelgetriebe zum Einsatz gelangen.

Bezugszeichen

1 Gangwechselgetriebe
11 Getriebegehäuse neu
11A Getriebegehäuse alt
12 Getriebegehäusedeckel
13 Einfacher runder Deckel
14 Ringfeder
2 Hydrodynamischer Drehmomentwandler (hydrodynamische Einheit)
3 Reduziertes Planetenkoppelgetriebe
31 Abtriebsstirnrad
310 Laufverzahnung
32 Hohlrad
320 Verbindung
33 1. Sonnenrad
34 2. Sonnenrad
35 Planetenträger
4 Achsgetriebe
41 Stirnrad
42 Abtriebshalbachse
43 Abtriebshalbachse
5 Seitenwelle
51 Stirnrad
52 Stirnrad
6 Lager
A, B, E Schaltkupplungen
C, C1, D Schaltbremsen
F, G Freiläufe
G1 Außenring
D1 Druckkolben
D2 Innenlamellenträger

**Patentansprüche**

1. Getriebe für ein Kraftfahrzeug mit einem quer zur Fahrtrichtung angeordneten Antriebsmotor und einem koaxial angeflanschten, selbsttätig schaltenden Gangwechselgetriebe (1), wobei zwischen dem Antriebsmotor und dem Gangwechselgetriebe (1) vorrangig noch eine hydrodynamische Einheit, z. B. ein hydrodynamischer Drehmomentwandler (2) angeordnet ist und über Schaltkupplungen (A, B, E), Schaltbremsen (C, C1, D) und Freiläufe (F, G) den Gängen zugeordnete Lastwechsel erfolgen und ein Abtriebsstirnrad (31) des Gangwechselgetriebes über eine Stirnradpaarung (31, 51) eine parallel zum Gangwechselgetriebe angeordnete Seitenwelle (5) treibt, dadurch gekennzeichnet, daß ein Abtriebselement (Hohlrad 32) eines reduzierten Planetenkoppelgetriebes (3) mit dem Abtriebsstirnrad (31) nahe der Laufverzahnung (310) des Abtriebsstirnrades (31) fest verbunden und ohne Zwischenschaltung eines Lagers unmittelbar neben dem Radsatz des Gangwechselgetriebes angeordnet ist, daß ein zur besseren Beherrschung der Schaltübergänge beim Gangwechsel nötiger Freilauf (G) in axialer Richtung nach dem Abtriebsstirnrad (31) am stirnseitigen Ende des Getriebes liegt und die Verbindung (320) von einem weiteren Getriebeelement, z. B. dem Planetenträger (35) zum Freilauf (G) durch das Abtriebsstirnrad (31) hindurchgezogen ist.

2. Getriebe für ein Kraftfahrzeug nach Anspruch 1, dadurch gekennzeichnet, daß der Freilaufaußenring (G1) Bestandteil des Getriebegehäusedeckels (12) und damit Bestandteil des Getriebegehäuses (11) ist.

3. Getriebe für ein Kraftfahrzeug nach einem der Ansprüche 1 oder 2, dadurch gekennzeichnet, daß die Montageöffnung für das auf der Seitenwelle (5) angeordnete Stirnrad (51) durch einen einfachen runden Deckel (13) verschlossen ist.

4. Getriebe für ein Kraftfahrzeug nach Anspruch 3, dadurch gekennzeichnet daß der runde Deckel über eine Ringfeder (14) oder einen Seegerring im Getriebegehäuse (11) gehalten ist.

5. Getriebe für ein Kraftfahrzeug nach einem der vorgenannten Ansprüche, dadurch gekennzeichnet, daß die Schaltbremse (D) zum Festhalten des Planetenträgers (35) in radialer Richtung über diesem angeordnet ist.

## Claims

1. A gear system for a motor vehicle comprising a drive motor arranged transversely in relation to the direction of travel and a coaxially flanged automatic gear-change box (1), wherein preferably a hydrodynamic unit, e. g. a hydrodynamic torque converter (2), is arranged between the drive motor and the gear-change box (1), and load cycles associated with the gears are effected via shifting clutches (A, B, E,), brakes (C, C1, D) and freewheels (F, G), and an output spur gear (31) of the gear-change box (1) drives a lateral shaft (5) arranged parallel to the gearchange box via a spur gear pair (31, 51), characterised in that an output element (ring gear 32) of a reduced planet coupled gear (3) is firmly connected with the output spur gear (31) near the tooth gearing (310) of the output spur gear (31) and is arranged directly beside the gear set of the gear-change box without an intermediate bearing, a freewheel (G) required for improved control over gear changes is arranged in axial direction behind the output spur gear (31) on the front end of the gear system, and the connection (320) of a further gear element, e. g. the planet carrier, to the freewheel (G) is run through the output spur gear (31).

2. A gear system for a motor vehicle according to claim 1, characterised in that the freewheel outer ring (G1) is part of the gearbox housing cover (12) and thus part of the gearbox housing (11).

3. A gear system for a motor vehicle according to claim 1 or 2, characterised in that the opening for mounting the spur gear (51) arranged on the lateral shaft (5) is sealed by means of a simple circular cover (13).

4. A gear system for a motor vehicle according to claim 3, characterised in that the circular cover is held in the gearbox housing (11) by means of an annular spring or a Seeger retaining ring.

5. A gear system for a motor vehicle according to one of the previous claims, characterised in that the brake (D) for stopping the planet carrier (35) is arranged in radial direction above said planet carrier.

## Revendications

1. Transmission pour véhicule à moteur comportant un moteur de traction disposé transversalement à la direction de marche et une boîte de vitesses automatique (1) couplée axialement à celui-ci, et dans laquelle, de préférence, une unité hydrodynamique, par exemple un convertisseur hydrodynamique de couple (2), est disposée entre le moteur et la boîte de vitesses (1), des embrayages (A, B, E) et freins (C, C1, D) de commutation ainsi que des roues libres (F, G) étant prévus pour opérer des changements de charges correspondant aux rapports de vitesse, et un pignon droit (31) de sortie de la boîte de vitesses étant agencé pour entraîner par un engrenage droit (31, 51) un arbre latéral (5) parallèle à la boîte de vitesses, caractérisée en ce qu'un élément de sortie (couronne 32) d'une boîte de couplage planétaire réduite (3) est lié rigidement audit pignon droit de sortie (31) à proximité de la denture (310) de ce pignon (31) et est disposé directement à côté du train d'engrenages de la boîte de vitesses sans interposition d'un palier, en ce qu'une roue libre (G) nécessaire pour mieux maîtriser les transitions lors des changements de vitesses se trouve axialement au-delà dudit pignon de sortie (31) à l'extrémité de la transmission, et en ce que la liaison entre cette roue libre (G) et un autre élément de la transmission, par exemple le porte-satellites (35), s'étend à travers ledit pignon de sortie (31).

2. Transmission pour véhicule à moteur selon la revendication 1, caractérisée en ce que la bague extérieure (G1) de ladite roue libre est une partie intégrante du couvercle (12) du carter de la transmission, donc une partie intégrante de ce carter (11).

3. Transmission pour véhicule à moteur selon l'une des revendications 1 ou 2, caractérisée en ce que l'ouverture de montage prévue pour le pignon droit (51) monté sur l'arbre latéral (5) est fermée par un simple couvercle rond (13).

4. Transmission pour véhicule à moteur selon la revendication 3, caractérisée en ce que le couvercle rond est tenu dans le carter (11) par un ressort annulaire (14) ou par un anneau de type « Seeger ».

5. Transmission pour véhicule à moteur selon l'une des revendications précédentes, caractérisée en ce que le frein de commande (D) destiné à bloquer le porte-satellites (35) est disposé par dessus celui-ci en direction radiale.

FIG.1

FIG.2